**Europäisches Patentamt**

**European Patent Office**

**Office européen des brevets**

(19)

(11) Veröffentlichungsnummer : **0 124 815 B2**

(12) **NEUE EUROPÄISCHE PATENTSCHRIFT**

(45) Veröffentlichungstag der neuen Patentschrift :
29.04.92 Patentblatt 92/18

(51) Int. Cl.⁵ : **C11D 3/00**, C11D 1/72,
C23G 5/00

(21) Anmeldenummer : **84104534.7**

(22) Anmeldetag : **21.04.84**

(54) **Verwendung von Polyglykolethern als schaumdrückende Zusätze in schaumarmen Reinigungsmitteln.**

Die Akte enthält technische Angaben, die nach dem Eingang der Anmeldung eingereicht wurden und die nicht in dieser Patentschrift enthalten sind.

(30) Priorität : **02.05.83 DE 3315951**

(43) Veröffentlichungstag der Anmeldung :
**14.11.84 Patentblatt 84/46**

(45) Bekanntmachung des Hinweises auf die Patenterteilung :
**08.02.89 Patentblatt 89/06**

(45) Bekanntmachung des Hinweises auf die Entscheidung über den Einspruch :
**29.04.92 Patentblatt 92/18**

(84) Benannte Vertragsstaaten :
**AT BE CH DE FR GB IT LI NL SE**

(56) Entgegenhaltungen :
**EP-A- 0 040 713**
**EP-B- 0 054 895**
**DE-A- 1 621 593**
**DE-A- 1 692 017**
**DE-A- 2 556 499**
**DE-A- 3 013 923**
**US-A- 4 405 490**

(73) Patentinhaber : **Henkel Kommanditgesellschaft auf Aktien Postfach 1100 Henkelstrasse 67 W-4000 Düsseldorf-Holthausen (DE)**

(72) Erfinder : **Schmid, Karl, Dr. Stifterstrasse 10 W-4020 Mettmann (DE)**
Erfinder : **Baumann, Horst, Dr. Vogelwarte 17 W-5653 Leichlingen (DE)**
Erfinder : **Geke, Jürgen, Dr. Stoffeler Damm 108 W-4000 Düsseldorf 1 (DE)**
Erfinder : **Germscheid, Hans-Günther, Dr. Dachsring 12 W-4033 Hösel (DE)**
Erfinder : **Lüdecke, Werner Naheweg 17 W-4006 Erkrath 2 (DE)**
Erfinder : **Piorr, Robert, Dr. Kieselei 12 W-4030 Ratingen (DE)**
Erfinder : **Rossmann, Christian Kolpingstrasse 3 W-4018 Langenfeld (DE)**
Erfinder : **Scharf, Rolf Knippratherstrasse 27 W-4019 Monheim (DE)**
Erfinder : **Schlüssler, Hans-Jochaim, Dr. Am Mühlenbusch 43 W-5657 Haan (DE)**

## Beschreibung

Die Erfindung betrifft die Verwendung von endgruppenverschlossenen Alkylpolyethylenglykolethern als schaumdrückende Zusätze in schaumarmen Reinigungsmitteln.

Für die Verwendung in Gewerbe und Industrie bestimmte wässrige Reinigungsmittel, insbesondere solche für die Reinigung von Metall-, Glasund Keramik und Kunststoffoberflächen, enthalten in der Regel Substanzen, die in der Lage sind, einer unerwünschten Schaumentwicklung entgegenzuwirken. Der Einsatz von schaumdrückenden Zusätzen ist in den meisten Fällen dadurch bedingt, dass die von den Substraten abgelösten und in den Reinigungsbädern sich ansammelnden Verunreinigungen als Schaumbildner wirken. Daneben kann die Verwendung von Antischaummitteln auch aufgrund der Tatsache erforderlich sein, dass die Reinigungsmittel selbst Bestandteile enthalten, die unter den vorgegebenen Arbeitsbedingungen zu unerwünschter Schaumbildung Anlass geben, beispielsweise Aniontenside oder bei Arbeitstemperatur schäumende nichtionische Tenside.

Als schaumdrückende Zusätze werden seit langem Anlagerungsprodukte von Alkylenoxiden an organische Verbindungen, die - vorzugsweise mehrere - reaktive Wasserstoffatome im Molekül besitzen, mit gutem Erfolg eingesetzt. Hier haben sich insbesondere Anlagerungsprodukte von Propylenoxid an aliphatische Polyalkohole (siehe DE-PS 1 280 455 und DE-PS 1621592) und an aliphatische Polyamine (siehe DE-PS 1 289 597 und DE-PS 1 621 593) sowie Anlagerungsprodukte von Ethylenoxid und Propylenoxid an aliphatische Polyamine, insbesondere Ethylendiamin (siehe DE-PS 1 944 569), in der Praxis bewährt. Diese Alkylenoxidanlagerungsprodukte besitzen neben einer guten schaumdrückenden Wirkung auch die für die Anwendung in gewerblichen und industriellen Reinigungsmitteln zumeist erforderliche Alkalistabilität. Die Verbindungen dieser Klasse sind jedoch nicht hinreichend biologisch abbaubar, um den geltenden gesetzlichen Vorschriften (RVO zum Waschmittelgesetz) zu genügen.

Der vorliegenden Erfindung lag daher die Aufgabe zugrunde, schaumdrückende Substanzen aufzufinden, deren anwendungstechnische Eigenschaften denen der Mittel des bekannten Standes der Technik zumindest gleichkommen und die darüber hinaus auch noch die geforderte biologische Abbaubarkeit besitzen. Die Lösung dieser Aufgabe geht von der Erkenntnis aus, dass bestimmte, im folgenden definierte, endgruppenverschlossene Anlagerungsprodukte des Ethylenoxids an längerkettige aliphatische Alkohole in der Lage sind, die gestellten Anforderungen, sowohl im Hinblick auf die anwendungstechnische Brauchbarkeit als auch im Hinblick auf die biologische Abbaubarkeit, zu erfüllen.

Gegenstand der Erfindung ist die Verwendung von Polyethylenglykolethern der Formel I,

$$R^1\text{-}O\text{-}(CH_2CH_2O)n\text{-}R^2 \quad (I)$$

in der $R^1$ einen geradkettigen oder verzweigten Alkylrest oder Alkenylrest mit 8 bis 18 Kohlenstoffatomen, $R^2$ einen geradkettigen Alkylrest mit 4 bis 8 Kohlenstoffatomen und n eine Zahl von 7 bis 12 bedeutet, als schaumdrückende Zusätze für schaumarme Reinigungsmittel.

Als Ausgangsmaterial für die Herstellung der Polyglykolether der Formel I können die Fettalkohole n-Octanol, n-Decanol, n-Dodecanol, n-Tetradecanol, n-Hexadecanol, n-Octadecanol, n-Octadecen-9,10-ol (Oleylalkohol) und Oxoalkohole der genannten Kohlenstoffzahl einzeln oder im Gemisch eingesetzt werden.

Zur Herstellung der erfindungsgemäss zu verwendenden Alkylpolyethylenglykolether setzt man zweckmässigerweise die vorstehend beschriebenen Fettalkohole mit Ethylenoxid im Molverhältnis von 1:7 bis 1:12 um und verethert anschliessend die im erhaltenen Reaktionsprodukt vorhandenen Hydroxylgruppen. Die Umsetzung mit Ethylenoxid erfolgt dabei unter den bekannten Alkoxylierungsbedingungen, vorzugsweise in Gegenwart von geeigneten alkalischen Katalysatoren. Die Veretherung der freien Hydroxylgruppen wird bevorzugt unter den bekannten Bedingungen der Williamsonschen Ethersynthese mit geradkettigen $C_4$-$C_8$-Alkylhalögeniden durchgeführt, beispielsweise mit n-Butyliodid, Amylchlorid, n-Hexylchlorid, n-Heptylbromid und n-Octylchlorid. Dabei kann es zweckmässig sein, Alkylhalogenid und Alkali im stöchiometrischen Uberschuss, beispielsweise von 100 bis 200%, über die zu veretherenden Hydroxylgruppen einzusetzen.

Die biologische Abbaubarkeit der erfindungsgemäss zu verwendenden endgruppenverschlossenen Alkylpolyethylenglykolether nach den gesetzlichen Bestimmungsmethoden liegt bei über 80% BiAS-Abnahme.

In einer speziellen Ausführungsform der Erfindung werden Polyglykolether der Formel I eingesetzt, in der n eine Zahl von 8 bis 10 bedeutet. Besonders bevorzugt ist die Verwendung von Verbindungen der Formel I, in der $R^2$ = n-Butyl und n = 9 ist.

In einer weiteren bevorzugten Ausführungsform werden die Polyglykolether der Formel I in Kombination mit Polyethylenglykolethern eingesetzt, wie sie durch Anlagerung von 4 bis 20 Gewichtsteilen Ethylenoxid an 1 Gewichtsteil Polyglycerin mit einer Hydroxylzahl im Bereich von 900 bis 1200 und anschliessende Veretherung der freien Hydroxylgruppen mit Alkylhalogeniden mit 4 bis 8 Kohlenstoffatomen erhältlich sind.

Das Ausgangsmaterial für die Herstellung der endgruppenverschlossenen Polyglycerinpolyglykolether fällt bei der grosstechnischen Glycerinherstellung als Destillationsrückstand an. Es handelt sich dabei um Gemische aus höhermolekularen Kondensationsprodukten des Glycerins, bevorzugt aus solchen mit 2 bis 10 Glycerinresten im Molekül. Diese Polyglycerine sind durch ihre Hydroxylzahl charakterisiert. die in der Regel zwischen 900 und 1200 liegt. Entsprechende Polyglycerine können auch auf synthetischem Weg erhalten werden, beispielsweise durch längeres Erhitzen von Glycerin auf 220 bis 240°C in Gegenwart von Ätzalkali, vorzugsweise in Schutzgasatmosphäre, und Abdestillieren des bei der Kondensation gebildeten Wassers.

Zur Herstellung der endgruppenverschlossenen Polyglycerinpolyglykolether setzt man zweckmässigerweise die vorstehend beschriebenen Polyglycerine mit Ethylenoxid im Gewichtsverhältnis von 1:4 bis 1:20 um und verethert anschliessend die im erhaltenen Reaktionsprodukt vorhandenen Hydroxylgruppen. Die Umsetzung mit Ethylenoxid und die Veretherung der Hydroxylgruppen mit Alkylhalogeniden erfolgt dabei in Analogie zu der weiter oben beschriebenen Herstellung der endgruppenverschlossenen Fettalkoholpolyethylenglykolether.

Es wurde festgestellt, dass Gemische aus den Polyglykolethern der Formel I und den oben definierten endgruppenverschlossenen Polyglycerinpolyglykolethern im Gewichtsverhältnis von 1:1 bis 9:1, vorzugsweise von 2,3:1 bis 9:1 sich durch eine unerwartet starke schaumdrückende Wirkung auszeichnen. Diese Gemische erfüllen ebenfalls die gesetzlichen Anforderungen an die biologische Abbaubarkeit.

Die erfindungsgemäss zu verwendenden endgruppenverschlossenen Polyglykolether der Formel I und die hier in Betracht kommenden Polyglycerinpolyglykolalkylether zeichnen sich durch ihre Alkali- und Säurestabilität aus. Die schaumverhindernde Wirkung der Verbindungen der Formel I in alkalischen bis schwach sauren Reinigungsflotten ist zumindest ebenso gut wie die von vergleichbaren bekannten Schauminhibitoren. Die beschriebenen Gemische aus Verbindungen der Formel I und endgruppenverschlossenen Polyglycerinethylenglykolethern sind den bekannten Schauminhibitoren überlegen.

Die Reinigungsmittel, in denen die endgruppenverschlossenen Polyglykolether erfindungsgemäss zur Anwendung kommen, können die in solchen Mitteln üblichen Bestandteile, wie Netzmittel, Gerüstsubstanzen und Komplexbildner, Alkalien oder Säuren, Korrosionsinhibitoren und gegebenenfalls auch antimikrobielle Wirkstoffe und/oder organische Lösungsmittel enthalten. Als Netzmittel kommen nichtionogene oberflächenaktive Substanzen, wie Polyglykolether, die durch Anlagerung von Ethylenoxid an Alkohole, insbesondere Fettalkohole, Alkylphenole, Fettamine und Carbonsäureamide erhalten werden, und anionenaktive Netzmittel, wie Alkalimetall-, Amin- und Alkylolaminsalze von Fettsäuren, Alkylschwefelsäuren, Alkylsulfonsäuren und Alkylbenzolsulfonsäuren in Betracht. An Gerüstsubstanzen und Komplexbildnern können die Reinigungsmittel vor allem Alkalimetallorthophosphate-, -polymerphosphate, -silikate, -borate, -carbonate, -polyacrylate und -glukonate sowie Zitronensäure, Nitriloessigsäure, Ethylendiamintetraessigsäure, 1-Hydroxyalkan-1,1-diphosphonsäuren, Aminotri(methylenphosphonsäure) und Ethylendiamintetra-(methylenphosphonsäure), Phosphonoalkanpolycarbonsäuren wie z. B. Phosphonobutantricarbonsäure und Alkalimetallsalze dieser Säuren enthalten. Hochalkalische Reinigungsmittel, insbesondere solche für die Flaschenreinigung, enthalten beträchtliche Mengen Atzalkali in Form von Natrium- und Kaliumhydroxid. Wenn besondere Reinigungseffekte gewünscht werden, können die Reinigungsmittel organische Lösungsmittel, beispielsweise Alkohole, Benzinfraktionen und chlorierte Kohlenwasserstoffe, und freie Alkylolamine enthalten.

Unter Reinigungsmittel werden im Zusammenhang mit der Erfindung einmal die zur direkten Anwendung auf die zu reinigenden Substrate bestimmten wässrigen Lösungen verstanden. Daneben umfasst der Begriff Reinigungsmittel auch die zur Herstellung der Anwendungslösungen bestimmten Konzentrate und festen Mischungen.

Die gebrauchsfertigen Lösungen können schwach sauer bis stark alkalisch sein.

Die erfindungsgemäss zu verwendenden endgruppenverschlossenen Polyglykolether werden den Reinigungsmitteln in solchen Mengen zugesetzt, dass ihre Konzentration in den gebrauchsfertigen Lösungen in der Regel 10 bis 2500 ppm, vorzugsweise 50 bis 500 ppm, ausmacht.

Beispiele

Herstellung der endgruppenverschlossenen Alkylpolyglykolether

676 g (1 Mol) Anlagerungsprodukt von 10 Mol Ethylenoxid an n-Dodecanol, 185 g (2 Mol) n-Butylchlorid und 320 g 75-gewichtsprozentiger Natronlauge (6 Mol NaOH) wurden 4 Stunden lang bei 120 °C gerührt. Das abgekühlte Reaktionsgemisch wurde mit 300 ml Wasser versetzt. Anschliessend wurde die wässrige Phase abgetrennt. Die organische Phase wurde solange mit Wasser von ca. 50°C gewaschen, bis die Waschflüssigkeit neutral reagierte. Durch Erhitzen auf 50 °C im Wasserstrahlvakuum wurde nicht umgesetztes Butylchlorid und Wasser aus dem Reaktionsprodukt entfernt. Es wurden 680 g n-Dodecylethylenglykolbutylether (n-Dodecanol + 10 EO + Butyl) erhalten. Die Hydroxylzahl des Produktes betrug 3,5.

In analoger Weise wurde eine Reihe von weiteren endgruppenverschlossenen Alkylpolyethylenglykolethern hergestellt. Diese Substanzen und das vorstehend beschriebene Produkt sind in der Tabelle I zusammen mit ihren Trübungspunkten in Wasser oder 1-gewichtsprozentigen NaOH-Lösung wiedergegeben.

Herstellung der endgruppenverschlossenen Polyglycerinpolyethylenglykolether

In einem Hubrührautoklaven wurden 137 g Polyglycerin (Hydroxylzahl 961) in Gegenwart von 3 g Natriummethylat mit 1176 g Ethylenoxid (Gewichtsverhältnis 1:8,6) bei 180°C und 10 bar umgesetzt. Es wurden 1313 g Polyglycerinethylenglykolether mit einer Hydroxylzahl von 113 erhalten.

350 g des erhaltenen Produkts, 171 g n-Hexylchlorid und 228 g 75-gewichtsprozentige Natriumhydroxidlösung wurden 4 Stunden lang bei 120 °C

Tabelle I

Endgruppenverschlossene Alkylpolyethylenglykolether

| Produkt | Zusammensetzung | $Tp(H_2O)$ °C | $Tp(NaOH)^*$ °C |
|---|---|---|---|
| A | n-Dodecanol + 9EO + n-Butyl | – | 16 |
| B | n-Dodecanol + 10EO + n-Butyl | 32 | 24 |
| C | $C_{8-14}$-Fettalkohol + 9EO + n-Butyl | – | 16 |
| D | $C_{8-14}$-Fettalkohol + 11EO + n-Hexyl | 5 | < 5 |
| E | $C_{8-18}$-Fettalkohol + 10EO + n-Butyl | – | 20 |
| F | $C_{12-18}$-Fettalkohol + 10EO + n-Butyl | – | 21 |

* gemessen in 1-gewichtsprozentiger NaOH-Lösung

gerührt. Aus dem abgekühlten Reaktionsgemisch wurde die wässrige Phase abgetrennt. Die organische Phase wurde so lange mit Wasser von 50°C gewaschen, bis die Waschflüssigkeit neutral reagierte. Nicht umgesetztes Hexylchlorid und Wasser wurden aus dem Reaktionsgemisch durch Erhitzen auf 150 °C im Wasserstrahlvakuum entfernt. Es wurden 281,5 g Polyglycerinpolyethlenglykolhexylether (1 GT Polyglycerin + 8,6 GT EO + Butyl) erhalten. Die Hydroxylzahl des Produktes betrug 3,5.

In analoger Weise wurden weitere endgruppenverschlossene Polyglycerinpolyethylenglykolether hergestellt. Diese Substanzen und das vorstehend beschriebene Produkt sind in der Tabelle II zusammen mit ihren Trübungspunkten in Wasser oder 1-gewichtsprozentiger NaOH-Lösung wiedergegeben.

Tabelle II

Endgruppenverschlossene Polyglycerinpolyethylenglykolether

| Produkt | Zusammensetzung (PG = Polyglycerin; EO = Ethylenoxid) | $Tp(H_2O)$ °C | $Tp(NaOH)^*$ °C |
|---|---|---|---|
| G | 1 GT PG + 4,3 GT EO + n-Butyl | – | 21 |
| H | 1 GT PG + 5,0 GT EO + n-Butyl | – | 28 |
| I | 1 GT PG + 5,7 GT EO + n-Butyl | – | 40 |
| J | 1 GT PG + 5,7 GT EO + n-Hexyl | 5 | – |
| K | 1 GT PG + 8,6 GT EO + n-Butyl | – | 45 |
| L | 1 GT PG + 8,6 GT EO + n-Hexyl | 15 | – |
| M | 1 GT PG + 8,6 GT EO + n-Octyl | – | 5 |
| N | 1 GT PG + 13,0 GT EO + n-Hexyl | 20–31 | – |

* gemessen in 1-gewichtsprozentiger NaOH-Lösung

Beispiel 1

Prüfung der Antischaumwirkung erfolgte mit Testlösungen, die 1 Gewichtsprozent Natriumhydroxid und 0,03 Gewichtsprozent (300 ppm) Entschäumer enthielten. Diese Lösungen wurden im Verlauf der Tests in Sprüngen von jeweils 100 ppm steigende Mengen von Triethanolamintetrapropylenbenzolsulfonat als Testschäumer zugesetzt. Als Entschäumer wurden die Produkte A bis F und die Gemische

O)    9 Gewichtsteile A
      1 Gewichtsteil K

P)    9 Gewichtsteile A

1 Gewichtsteil M

Q)    4 Gewichtsteile A

1 Gewichtsteil L

geprüft. Als Vergleichssubstanz wurde

R)    Ethylendiamin + 30 EO + 30 PO

(PO = Propylenoxid) eingesetzt.

Jeweils 200 ml der Testlösungen wurden bei 65 °C in der Schaumschlagapparatur nach DIN 53 902 geprüft. Das Schaumvolumen in ml wurde jeweils 5 Sekunden nach einer Serie von 100 Schlägen in 100 Sekunden abgelesen. Für jede Testschäumerkonzentration wurde ein Durchschnittswert aus 5 Einzelmessungen ermittelt. Aus den erhaltenen Ergebnissen ist in der zweiten Spalte der nachstehenden Tabelle III jeweils das Schaumvolumen angegeben, das bei einer Testschäumerkonzentration von 1200 ppm beobachtet wurde. Als zweiter repräsentativer Messwert ist in der dritten Spalte der Tabelle III die Testschäumerkonzentration angegeben, bei der zum ersten Mal ein Schaumvolumen über 200 ml gemessen wurde.

Tabelle III

| Entschäumer | ml Schaum bei 1200 ppm Testschäumer | ppm Testschäumer bei >200 ml Schaum |
|---|---|---|
| A | 40 | 2000 |
| B | 50 | 1800 |
| C | 50 | 1800 |
| D | 60 | 1600 |
| E | 60 | 1600 |

Tabelle III  (Fortsetzung)

| Entschäumer | ml Schaum bei 1200 ppm Testschäumer | ppm Testschäumer bei >200 ml Schaum |
|---|---|---|
| F | 35 | 2000 |
| O | 40 | 2000 |
| P | 30 | 2400 |
| Q | 40 | 2800 |
| R (Vergleich) | 40 | 1800 |

Beispiel 2

Durch mechanisches Vermischen der Komponenten wurde ein lagerbeständiges festes Flaschenreinigungsmittel folgender Zusammensetzung (GT = Gewichtsteile) hergestellt:

80 GT    Ätznatron

12 GT    Natriumtripolyphosphat

5 GT    Natriumsilikat (Molverhältnis $Na_2O:SiO_2$

= 3,35)

3 GT    Produkt B

Mit einer 1-gewichtsprozentigen Lösung dieses Reinigungsmittels wurden Milchflaschen bei 80 °C in einer handelsüblichen Flaschenreinigungsanlage mit einer Laugenzone und einer Stundenleistung von 18 000 Flaschen gereinigt. Bei guter Reinigungswirkung wurde keine störende Schaumentwicklung beobachtet.

Beispiel 3

Durch mechanisches Vermischen der Komponenten wurde ein lagerbeständiges festes Wirkstoffgemisch folgender Zusammensetzung erhalten:

80 GT    Natriumtripolyphosphat

20 GT    Produkt D

In einer Flaschenreinigungsanlage mit drei Laugenzonen und einer Stundenleistung von 80 000 Flaschen wurden bei 85 °C Bierflaschen gereinigt. Die Bierflaschen waren mit Papieretiketten unter Verwendung eines Kaseinleims etikettiert, der sonst zu starkem Schäumen in den Tauchbädern führt. Wurde als Reinigungslösung 1,5-gewichtsprozentige Natronlauge eingesetzt, die 0,15 Gewichtsprozent des oben beschriebenen Wirkstoffgemisches enthielt, so konnte die Anlage ohne störende Schaumentwicklung betrieben werden.

Beispiel 4

Durch mechanisches Vermischen der Komponenten wurde ein lagerbeständiges Wirkstoffgemisch folgender Zusammensetzung erhalten:

40 GT   Na-Ethylendiamintetraacetat
20 GT   Natriumtripolyphosphat
30 GT   Natriumglukonat
10 GT   Produkt F

In einer handelsüblichen Flaschenreinigungsanlage mit zwei getrennten Laugenzonen und einer Stundenleistung von 24 000 Flaschen wurden Weinflaschen bei 85 °C gereinigt. Als Reinigungslösung wurde 1,5-gewichtsprozentige Natronlauge verwendet, der 0,5 Gewichtsprozent des oben beschriebenen Konzentrates zugesetzt worden waren. Die Reinigung verlief ohne störende Schaumentwicklung. Die durchgesetzten Flaschen waren einwandfrei gereinigt.

Beispiel 5

Durch Auflösen der Komponenten in Phosphorsäure wurde ein Reinigungsmittelkonzentrat der folgenden Zusammensetzung hergestellt:

5 GT    Aminotri-(methylenphosphonsäure)
10 GT   1-Hydroxyethan-1,1-diphosphonsäure
5 GT    Phosphonobutantricarbonsäure
27 GT   Produkt A
3 GT    Produkt M
10 GT   Ethanol
40 GT   Phosphorsäure, 75 Gewichtsprozent

In einer konventionellen Flaschenreinigungsanlage mit drei Laugebädern wurden Mineralwasserflaschen bei 80 °C gereinigt. Als Reinigungslösung diente eine 2-gewichtsprozentige Natronlauge, der 0,1 Gewichtsprozent des oben beschriebenen Konzentrats zugesetzt worden war. Die Reinigung verlief ohne störende Schaumentwicklung. Die durchgesetzten Flaschen waren einwandfrei gereinigt.

Beispiel 6

Für die Reinigung von metallischen Oberflächen im Spritzverfahren wurde ein lagerstabiles Reinigungsmittel der nachstehenden Zusammensetzung durch mechanisches Vermischen der Komponenten hergestellt:

80 GT   Natriummetasilikat-Pentahydrat
16 GT   Natriumtripolyphosphat
4 GT    Kokosamin + 12 EO
1 GT    Produkt A

Die Schaumbildung und der Schaumzufall einer 2-gewichtsprozentigen Lösung dieses Reinigungsmittels wurde nach DIN 53 902 bei 60°C im Vergleich zu einem Mittel ohne Zusatz von Produkt A, jedoch sonst gleicher Zusammensetzung geprüft. Die Ergebnisse sind in der Tabelle IV wiedergegeben.

Tabelle IV

| Reinigungsmittel | ml Schaum nach min. | | | |
|---|---|---|---|---|
| | 0 | 1 | 2 | 10 |
| Vergleich | 530 | 140 | 0 | 0 |
| erfindungsgemäss | 170 | 15 | 0 | 0 |

Biespiel 7

Durch mechanisches Vermischen der Komponenten wurde ein Tauchentfettungsmittel für metallische Wirkstoffe folgender Zusammensetzung hergestellt:

40 GT      Natriummetasilikat-Pentahydrat
35 GT      Natriumcarbonat
20 GT      Natriumtripolyphosphat
2,5 GT      Natriumalkylbenzolsulfonat
2,5 GT      Nonylphenol + 14 EO
4,5 GT      Produkt D
0.5 GT      Produkt J

Mit einer 4-gewichtsprozentigen Lösung dieses Reinigungsmittels wurden fettverschmutzte Formteile aus Stahl bei 60°C im Tauchverfahren gereinigt. Die Entfettungswirkung war sehr gut; es wurde keine störende Schaumentwicklung beobachtet.

Beispiel 8

Durch Auflösen der Komponenten in Wasser wurde ein lagerstabiles Konzentrat für die Reinigung von Metalloberflächen mit folgender Zusammensetzung hergestellt:

30 GT      Natriumcaprylat
10 GT      Borax
14 GT      Natriumtripolyphosphat
10 GT      Triethanolamin
2 GT      Monoethanolamin
6 GT      Produkt C
78 GT      Wasser

Mit einer 1,5-gewichtsprozentigen Lösung des Reinigungsmittels (pH-Wert 8,5) wurden Eisenoberflächen bei 50-55 °C im Spritzverfahren gereinigt. Bei guter Reinigungswirkung trat keine störende Schaumentwicklung auf.

Beispiel 9

Durch Auflösen der Komponenten in Wasser wurde ein lagerstabiles Konzentrat für die Reinigung von Metalloberflächen mit folgender Zusammensetzung erhalten:

25 GT      Diethanolaminsalz der Isononsäure
20 GT      Diethanolamin
1 GT      Benzotriazol
4 GT      Produkt C
50 GT      Wasser

Eine 1-gewichtsprozentige Lösung dieses Reinigungsmittels wurde bei 50-55 °C zur Spritzreinigung von Graugussteilen eingesetzt. Bei guter Reinigungswirkung wurde keine störende Schaumentwicklung beobachtet.

**Patentansprüche**

1. Verwendung von polyethylenglykolethern der Formel I,

$$R^1\text{-O-}(CH_2CH_2O)_n\text{-}R^2 \quad (I)$$

in der $R^1$ einen geradkettigen oder verzweigten Alkyl- oder Alkenylrest mil 8 bis 18 Kohlenstoffatomen, $R^2$ einen geradkettigen Alkylrest mil 4 bis 8 Kohlenstoffatomen und n eine Zahl von 7 bis 12 bedeutet, als schaumdrückende Zusätze für schaumarme Reinigungsmittel.

2. Verwendung von polyethylenglykolethern nach Anspruch 1, dadurch gekennzeichnet, dass in der Formel I n eine Zahl von 8 bis 10 bedeutet.

3. Verwendung von polyethylenglykolethern nach Anspruch 1, dadurch gekennzeichnet, dass in der Formel I $R^2$ = n-Butyl und n = 9 ist.

4. Verwendung von Polyethylenglykolethern nach den Ansprüchen 1 und 2, dadurch gekennzeichnet, dass Gemische aus Polyethylenglykolethern der Formel I und Polyethylenglykolethern, wie sie durch Anlagerung von 4 bis 20 Gewichtsteilen Ethylenoxid an 1 Gewichtsteil Polyglycerin mit einer Hydroxylzahl von 900 bis 1200 und anschliessende Veretherung der freien Hydroxylgruppen mit Alkylhalogeniden mit 4 bis 8 Kohlenstoffatomen erhältlich sind, im Gewichtsverhältnis von 1:1 bis 9:1, vorzugsweise 2,3:1 bis 9:1, eingesetzt werden.

5. Verwendung von Polyethylenglykolethern nach den Ansprüchen 1 bis 3, dadurch gekennzeichnet, dass die endgruppenverschlossenen Polyglykolether in solchen Mengen eingesetzt werden, dass ihre Konzentration in den gebrauchsfertigen Lösungen 10 bis 2500 ppm, vorzugsweise 50 bis 500 ppm ausmacht.

## Claims

1. The use of polyethylene glycol ethers corresponding to the following formula
$$R^1 - O - (CH_2CH_2O)_n - R^2 \quad (I)$$
in which $R^1$ represents a linear or branched alkyl or alkenyl radical containing from 8 to 18 carbon atoms, $R^2$ represents a linear alkyl radical containing from 4 to 8 carbon atoms and n is a number of from 7 to 12, as foam-inhibiting additives for low-foam cleaning agents.

2. The use of polyethylene glycol ethers claimed in Claim 1, characterized in that, in formula I, n is a number of from 8 to 10.

3. The use of polyethylene glycol ethers claimed in Claim 1, characterized in that, in formula I, $R^2$ represents n-butyl and n = 9.

4. The use of polyethylene glycol ethers claimed in Claims 1 and 2, characterized in that mixtures of polyethylene glycol ethers of formula I and polyethylene glycol ethers of the type obtained by the addition of from 4 to 20 parts by weight of ethylene oxide onto 1 part by weight of polyglycerol, hydroxyl number 900 to 1200, and subsequent etherification of the free hydroxyl groups with alkyl halides containing from 4 to 8 carbon atoms, in a ratio by weight of from 1:1 to 9:1 and preferably from 2.3:1 to 9:1, are used.

5. The use of polyethylene glycol ethers claimed in Claims 1 to 3, characterized in that the terminal-group-blocked polyglycol ethers are used in such quantities that their concentration in the solutions ready for use makes up from 10 to 2500 ppm and preferably from 50 to 500 ppm.

## Revendications

1. Utilisation d'éthers de polyéthylèneglycol de formule I,
$$R^1 - O - (CH_2CH_2O)_n - R^2 \quad (I)$$
dans laquelle $R^1$ représente un reste alkyle ou un reste alcényle à chaîne linéaire ou ramifiée avec 8 à 18 atomes de carbone, $R^2$ un reste alkyle linéaire avec 4 à 8 atomes de carbone et n un chiffre de 7 à 12, comme additifs inhibiteurs de mousse pour produits nettoyants faiblement moussants.

2. Utilisation d'éthers de polyéthylèneglycol selon la revendication 1, caractérisée en ce que, dans la formule I, n représente un nombre de 8 à 10.

3. Utilisation d'éthers de polyéthylèneglycol selon la revendication 1, caractérisée en ce que, dans la formule I, $R^2$ = n-butyle et n = 9.

4. Utilisation d'éthers de polyéthylèneglycols selon les revendications 1 et 2, caractérisée en ce que l'on utilise des mélanges d'éthers de polyéthylène-glycol de formule I et d'éthers de polyéthylène-glycol tels qu'on peut en obtenir par addition de 4 à 20 parties en poids d'oxyde d'éthylène à 1 partie en poids de polyglycérine ayant un indice d'hydroxyle de 900 à 1200, puis éthérification des groupes hydroxyle libres avec des halogénures d'alkyle avec 4 à 8 atomes de carbone, dans un rapport pondéral de 1:1 à 9:1, de préférence 2,3:1 à 9:1.

5. Utilisation d'éthers de polyéthylèneglycol selon les revendications 1 à 3, caractérisée en ce que les polyglycoléthers bloqués par des groupes terminaux sont utilisés en quantités telles que leurs concentrations dans les solutions prêtes à l'emploi sont de 10 à 2500 ppm, de préférence de 50 à 500 ppm.